# FASCICULE DE BREVET EUROPEEN

(11) **EP 3 257 715 B1**
(45) Date de publication et mention de la délivrance du brevet: **05.12.2018**
(21) Numéro de dépôt: 17176117.4
(22) Date de dépôt: 14.06.2017
(51) Int. Cl.: B61C 9/38, B61C 9/50

(54) **DISPOSITIF DE TRACTION POUR UN VÉHICULE, NOTAMMENT POUR UN VÉHICULE FERROVIAIRE, À SÉCURITÉ AMÉLIORÉE**
ANTRIEBVORRICHTUNG FÜR EIN FAHRZEUG, INSBESONDERE EIN SCHIENENFAHRZEUG, MIT VERBESSERTER SICHERHEIT
A DRIVE DEVICE FOR A VEHICLE, IN PARTICULAR FOR A RAILWAY VEHICLE, HAVING AN IMPROVED SECURITY

(30) Priorité: 15.06.2016 FR 1655563
(43) Date de publication de la demande: 20.12.2017
(73) Titulaire: ALSTOM Transport Technologies, 93400 Saint-Ouen (FR)
(72) Inventeur: MORTREUX, Francis, 78600 Maisons-Laffitte (FR)
(74) Mandataire: Lavoix

(56) Documents cités:
- EP-A1- 0 025 484
- DE-A1- 1 901 931
- DE-A1- 2 025 555
- DE-A1-102014 201 237

## Description

La présente invention concerne un dispositif de traction pour un véhicule, notamment un véhicule ferroviaire.

Un tel dispositif de traction pour un véhicule ferroviaire est connu du document DE-A1-2025555.

On connait déjà, dans l'état de la technique, un dispositif de traction comportant au moins un moteur comprenant un arbre de sortie. L'arbre de sortie est destiné à entrainer un essieu du véhicule, généralement par l'intermédiaire d'une boîte de vitesse.

Dans certains cas, le moteur peut rencontrer des anomalies pouvant nuire à son fonctionnement, voire nuire à son intégrité. Par exemple, dans le cas d'un moteur synchrone, des courts circuits peuvent survenir au niveau du stator, générant ainsi une forte émission de chaleur augmentant la température localement. Une telle température peut endommager le moteur, et nécessite la présence d'équipements anti-incendie à proximité.

L'invention a notamment pour but d'améliorer la situation, en proposant un dispositif de traction dont la sécurité est améliorée.

A cet effet, l'invention a notamment pour objet un dispositif de traction pour un véhicule, notamment pour un véhicule ferroviaire, selon la revendication 1.

En cas d'anomalie détectée, le troisième élément est libéré en rotation, si bien que la rotation de l'essieu entraîne la rotation de ce troisième élément plutôt que celle de l'arbre du moteur. Ainsi, le moteur peut être arrêté sans rotation résiduelle due à l'essieu, en vue de mettre fin à l'anomalie détectée.

Un dispositif de traction selon l'invention peut comporter en outre l'une ou plusieurs des caractéristiques suivantes.
- Le moteur est du type synchrone.
- Les moyens de détection d'anomalie sont propres à détecter un court-circuit, dans le moteur ou dans un circuit d'alimentation électrique du moteur.
- Les moyens de blocage comprennent au moins un frein propre à enserrer le troisième élément en configuration de blocage et à relâcher le troisième élément en configuration de libération.
- Le troisième élément est formé par le planétaire extérieur et comporte une couronne comprenant une surface intérieure dentelée engrenant avec les satellites, les moyens de blocage comprenant au moins un frein propre à enserrer la couronne en configuration de blocage et à relâcher la couronne en configuration de libération.
- Le deuxième élément est formé par le porte-satellites et comporte une partie circulaire dentée destinée à engrener avec une roue dentée complémentaire portée par l'essieu.
- Le dispositif de traction comporte un onduleur alimentant le moteur.

L'invention concerne également un véhicule ferroviaire, comportant au moins un bogie muni d'au moins un essieu, caractérisé en ce qu'il comporte au moins un dispositif de traction tel que défini précédemment, dans lequel le train épicycloïdal est relié cinématiquement audit essieu.

L'invention concerne enfin un procédé de protection d'un dispositif de traction tel que défini précédemment, caractérisé en ce que :
- les moyens de détection surveillent en continu la présence d'une anomalie sur le moteur, et
- lorsqu'une anomalie est détectée, les moyens de commande passent les moyens de blocage dans la configuration de libération.

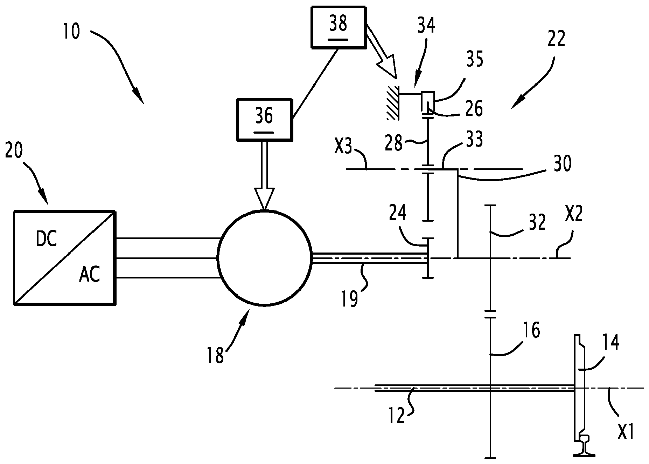

L'invention sera mieux comprise à la lecture de la description qui va suivre, donnée uniquement à titre d'exemple et faite en se référant à la figure unique annexée représentant schématiquement un dispositif de traction selon un exemple de mode de réalisation de l'invention.

On a représenté, sur la figure, un dispositif 10 de traction destiné à équiper un véhicule, notamment un véhicule ferroviaire.

Le véhicule comporte au moins un essieu 12 portant deux roues 14. Dans le cas d'un véhicule ferroviaire, celui-ci comporte habituellement au moins un bogie, comprenant au moins ledit essieu 12. L'essieu 12 est mobile en rotation autour d'un premier axe X1.

L'essieu 12 est solidaire en rotation avec une roue dentée 16 par l'intermédiaire de laquelle cet essieu 12 est relié cinématiquement au dispositif de traction 10.

Le dispositif de traction 10 comporte un moteur 18.

Avantageusement, le moteur 18 est un moteur synchrone. Un tel moteur synchrone est plus efficace et présente une meilleure compacité qu'un moteur asynchrone.

Le moteur 18 comporte de manière classique un stator et un rotor, le rotor étant solidaire en rotation avec un arbre de sortie 19. Cet arbre de sortie 19 est mobile en rotation autour d'un second axe X2.

Le moteur synchrone 18 est alimenté de manière classique par des moyens d'alimentation, comportant notamment un onduleur 20.

Le dispositif de traction 10 comporte un train épicycloïdal 22, disposé entre l'arbre de sortie 19 et l'essieu 12.

Le train épicycloïdal 22 comporte un premier, un deuxième et un troisième éléments, choisis parmi un planétaire intérieur 24, un planétaire extérieur 26, et un porte-satellites 30 portant des satellites 28 engrenant avec le planétaire intérieur 24 et avec le planétaire extérieur 26, le premier élément étant solidaire en rotation avec l'arbre de sortie 19, et le deuxième élément étant destiné à entraîner en rotation un essieu 12 du véhicule.

Dans l'exemple décrit, le premier élément est formé par le planétaire intérieur 24, qui est alors solidaire en rotation avec l'arbre de sortie 19, donc mobile en rotation autour du second axe X2.

Dans l'exemple décrit, le troisième élément est formé par le planétaire extérieur 26. Le planétaire extérieur 26présente une forme générale de révolution autour du second axe X2. Le planétaire extérieur 26 présente par exemple une forme de couronne, comprenant une surface intérieure dentée.

Le train épicycloïdal 22 comporte également au moins un satellite 28, généralement trois satellites 28, chacun engrenant avec le planétaire intérieur 24 et avec le planétaire extérieur 26 (notamment avec la surface intérieure dentée). Ainsi, chaque satellite 28 est disposé radialement entre le planétaire intérieur 24 et le planétaire extérieur 26. Chaque satellite 28 présente une forme générale de révolution autour d'un troisième axe respectif X3, et chaque satellite 28 est mobile en rotation autour de ce troisième axe respectif X3.

Conformément à l'exemple décrit, le second élément est formé par le porte-satellites 30. Le porte-satellites 30 comporte une partie circulaire dentée 32, mobile en rotation autour du second axe X2, et complémentaire de la roue dentée 16 et engrenant avec cette roue dentée 16. Le porte-satellites 30 comporte également, pour chaque satellite 28, une partie de support 33 en liaison pivot avec ce satellite 28, cette liaison pivot étant définie autour du troisième axe X3 correspondant.

Le dispositif de traction 10 comporte des moyens 34 de blocage du troisième élément, c'est-à-dire du planétaire extérieur 26 dans l'exemple décrit. Ainsi, lorsque le planétaire extérieur 26 est bloqué en rotation, la rotation de l'arbre de sortie 19 autour du second axe X2, donc du planétaire intérieur 24 autour du second axe X2, entraine en rotation les satellites 28 autours de leur troisième axe respectif X3.

Puisque les satellites 28 engrènent avec le planétaire extérieur 26 bloqué, ces satellites 28 se déplacent le long de sa surface intérieure, entrainant en rotation le porte-satellites 30 autour du second axe X2.

Ce porte-satellite 30 entraine alors l'essieu 12 en rotation autour du premier axe X1, par l'intermédiaire de la partie circulaire dentée 32 engrenant avec la roue dentée 16.

Les moyens de blocage 34 sont libérables, si bien qu'ils peuvent prendre une configuration de blocage dans laquelle le planétaire extérieur 26 est immobilisé en rotation, comme décrit ci-dessus, et une configuration de libération dans laquelle le planétaire extérieur 26 est libre en rotation autour de l'axe X2.

Les moyens de blocage 34 comprennent par exemple au moins un frein 35 propre à enserrer la couronne 26 en configuration de blocage et à relâcher la couronne 26 en configuration de libération.

Lorsque le planétaire extérieur 26 est libre en rotation, et que l'essieu 12 est en rotation autour du premier axe X1, cet essieu 12 entraine le porte-satellites 30 en rotation autour du second axe X2 par l'intermédiaire de la route dentée 16 engrenant avec la partie circulaire dentée 32.

Sous l'effet de la rotation du porte-satellites 30 autour du second axe X2, les satellites 28 se déplacent autour de ce second axe X2, tout en subissant une rotation autour de leur troisième axe respectif X3. Chaque satellite 28 engrène avec le planétaire extérieur 26, qui est libre en rotation, et le planétaire intérieur 24, qui est solidaire de l'arbre de sortie 19. La résistance à la rotation du planétaire intérieur 24 est donc très supérieure à celle du planétaire extérieur 26. Ainsi, la rotation des satellites 28 autour de leur troisième axe respectif X3 est transmise au planétaire extérieur 26 plutôt qu'au planétaire intérieur 24. Il en résulte que le moteur 18 peut être arrêté sans interférence avec la rotation de l'essieu 12.

Un tel arrêt du moteur 18 est souhaitable en cas d'anomalie sur ce moteur, notamment en cas de court-circuit dans ce moteur ou dans un circuit d'alimentation électrique du moteur.

Ainsi, le dispositif de traction 10 comporte des moyens 36 de détection d'une anomalie sur le moteur 18. Dans la présente description, on appellera « anomalie » tout dysfonctionnement du moteur pouvant nuire à son bon fonctionnement et/ou à son intégrité.

Les moyens de détection 36 comportent par exemple des moyens classiques de détection d'un court-circuit, et/ou des moyens de mesure de température permettant de détecter une hausse de température au-delà d'un seuil prédéterminé. Ainsi, une anomalie est par exemple considérée comme détectée lorsqu'un court-circuit est détecté ou lorsque la température dépasse le seuil prédéterminé.

Le dispositif de traction 10 comporte par ailleurs des moyens 38 de commande des moyens de blocage 34, propres à commander le maintien des moyens de blocage 34 dans la configuration de blocage ou le passage de ces moyens de blocage 34 dans la configuration de libération.

Les moyens de commande 38 sont reliés aux moyens de détection 36, si bien que le commande des moyens de blocage 34 est conditionnée par la détection d'anomalies.

Plus particulièrement, les moyens de commande 38 sont configurés pour maintenir les moyens de blocage 34 dans la configuration de blocage lorsque les moyens de détection 36 ne détectent pas d'anomalie, et pour passer les moyens de blocage 34 dans la configuration de libération lorsque les moyens de détection 36 détectent une anomalie.

Ainsi, lorsqu'une anomalie est détectée, le planétaire 26 est libéré en rotation, si bien que la rotation de l'arbre 19 n'interfère plus avec la rotation de l'essieu 12, comme décrit précédemment. Le moteur 18 peut ainsi être arrêté pour remédier à l'anomalie.

En d'autres termes, le dispositif de traction 10 permet de réaliser un procédé de protection du moteur 18, dans lequel :
- les moyens de détection 36 surveillent en continu la présence d'une anomalie sur le moteur 18, et
- lorsqu'une anomalie est détectée, les moyens de commande 38 passent les moyens de blocage 34 dans la configuration de libération.

Au cours du procédé de protection du moteur 18, les moyens de blocage 34 sont maintenus dans la configuration de blocage tant qu'aucune anomalie n'est détectée.

On notera que l'invention n'est pas limitée au mode de réalisation précédemment décrit, et pourrait présenter diverses variantes complémentaires.

En particulier, on peut prévoir d'autres moyens de détection d'anomalies conditionnant la libération des moyens de blocage 34 ainsi que d'autres configurations du train épicycloïdal 22.

Ainsi, en variante, le second élément est formé par le planétaire intérieur, qui est alors destiné à entraîner en rotation l'essieu, tandis que le premier élément est formé par le planétaire extérieur, qui est alors solidaire en rotation avec l'arbre de sortie. Dans ce cas, le troisième élément est formé par le porte-satellites, qui est donc associé aux moyens de blocage libérables.

## Revendications

1. Dispositif de traction (10) pour un véhicule, notamment pour un véhicule ferroviaire, le dispositif de traction (10) comportant:
- au moins un moteur (18) comprenant un arbre de sortie (19),
- un train épicycloïdal (22), comprenant un premier, un deuxième et un troisième éléments, choisis parmi un planétaire intérieur (24), un planétaire extérieur (26), et un porte-satellites (30) portant des satellites (28) engrenant avec le planétaire intérieur (24) et avec le planétaire extérieur (26), le premier élément étant solidaire en rotation avec l'arbre de sortie (19), le deuxième élément étant destiné à entraîner en rotation un essieu (12) du véhicule,
- des moyens de blocage (34) libérables, pouvant prendre une configuration de blocage dans laquelle ils immobilisent le troisième élément en rotation, et une configuration de libération dans laquelle le troisième élément est libre en rotation,
**caractérisé en ce qu'**il comporte:
- des moyens (36) de détection d'une anomalie sur le moteur (18),
- des moyens (38) de commande des moyens de blocage (34), propres à maintenir les moyens de blocage (34) dans la configuration de blocage lorsque les moyens de détection (36) ne détectent pas d'anomalie, et à passer les moyens de blocage (34) dans la configuration de libération lorsque les moyens de détection (36) détectent une anomalie.

2. Dispositif de traction (10) selon la revendication 1, dans lequel le moteur (18) est du type synchrone.

3. Dispositif de traction (10) selon la revendication 1 ou 2, dans lequel les moyens de détection d'anomalie (36) sont propres à détecter un court-circuit, dans le moteur (18) ou dans un circuit d'alimentation électrique du moteur.

4. Dispositif de traction (10) selon l'une quelconque des revendications précédentes, dans lequel les moyens de blocage (34) comprennent au moins un frein (35) propre à enserrer le troisième élément en configuration de blocage et à relâcher le troisième élément en configuration de libération.

5. Dispositif de traction (10) selon l'une quelconque des revendications précédentes, dans lequel le troisième élément est formé par le planétaire extérieur (26) et comporte une couronne comprenant une surface intérieure dentelée engrenant avec les satellites (28), les moyens de blocage (34) comprenant au moins un frein (35) propre à enserrer la couronne (26) en configuration de blocage et à relâcher la couronne (26) en configuration de libération.

6. Dispositif de traction (10) selon l'une quelconque des revendications précédentes, dans lequel le deuxième élément est formé par le porte-satellites (30) et comporte une partie circulaire dentée (32) destinée à engrener avec une roue dentée complémentaire (16) portée par l'essieu (12).

7. Dispositif de traction (10) selon l'une quelconque des revendications précédentes, comportant un onduleur (20) alimentant le moteur (18).

8. Véhicule ferroviaire, comportant au moins un bogie muni d'au moins un essieu (12), **caractérisé en ce qu'**il comporte au moins un dispositif de traction (10) selon l'une quelconque des revendications précédentes, dans lequel le train épicycloïdal (22) est relié cinématiquement audit essieu (12).

9. Procédé de protection d'un dispositif de traction (10) selon l'une quelconque des revendications 1 à 7, **caractérisé en ce que** :
- les moyens de détection (34) surveillent en continu la présence d'une anomalie sur le moteur (18), et
- lorsqu'une anomalie est détectée, les moyens de commande (38) passent les moyens de blocage (34) dans la configuration de libération.

## Patentansprüche

1. Antriebs-Vorrichtung (10) für ein Fahrzeug, insbesondere für ein Schienenfahrzeug, wobei die Antriebs-Vorrichtung (10) aufweist:
- wenigstens einen Motor (18), der eine Ausgangswelle (19) aufweist,
- einen Umlaufgetriebezug (22) mit einem ersten, einem zweiten und einem dritten Element, die ausgewählt sind aus einem Sonnenrad (24), einem Hohlrad (26) und einem Planetenträger (30), der Planeten (28) trägt, die mit dem Sonnenrad (24) und mit dem Hohlrad (26) im Eingriff stehen, wobei das erste Element mit der Ausgangswelle (19) drehfest verbunden ist und das zweite Element dazu bestimmt ist, eine Achse (12) des Fahrzeugs drehanzutreiben,
- freigebbare Sperr-Mittel (34), die einnehmen können eine Sperrkonfiguration, in welcher sie das dritte Element drehsperren, und eine Freigebekonfiguration, in welcher das dritte Element frei ist sich zu drehen,
**dadurch gekennzeichnet, dass** sie aufweist
- Mittel (36) zur Detektion einer Anomalie an dem Motor (18),
- Mittel (38) zur Steuerung der Sperr-Mittel (34), die imstande sind, die Sperr-Mittel (34) in der Sperrkonfiguration zu halten, wenn die Detektionsmittel (36) keine Anomalie detektieren, und die Sperr-Mittel (34) in die Freigebekonfiguration zu überführen, wenn die Detektionsmittel (36) eine Anomalie detektieren.

2. Antriebs-Vorrichtung (10) gemäß Anspruch 1, wobei der Motor (18) vom Synchron-Typ ist.

3. Antriebs-Vorrichtung (10) gemäß Anspruch 1 oder 2, wobei die Anomalie-Detektions-Mittel (36) imstande sind, einen Kurzschluss zu detektieren in dem Motor (18) oder in einem elektrischen Versorgungsschaltkreis des Motors.

4. Antriebs-Vorrichtung (10) gemäß irgendeinem der vorhergehenden Ansprüche, wobei die Sperr-Mittel (34) aufweisen wenigstens eine Bremse (35), die imstande ist, das dritte Element in der Sperrkonfiguration einzuspannen und das dritte Element in der Freigebekonfiguration freizugeben.

5. Antriebs-Vorrichtung (10) gemäß irgendeinem der vorhergehenden Ansprüche, wobei das dritte Element gebildet ist von dem Hohlrad (26) und aufweist einen Zahnkranz mit einer gezahnten Innenfläche, die mit den Planeten (28) im Eingriff steht, wobei die Sperr-Mittel (34) aufweisen wenigstens eine Bremse (35), die imstande ist, den Zahnkranz (26) in der Sperrkonfiguration einzuspannen und den Zahnkranz (26) in der Freigebekonfiguration freizugeben.

6. Antriebs-Vorrichtung (10) gemäß irgendeinem der vorhergehenden Ansprüche, wobei das zweite Element von dem Planetenträger (30) gebildet ist und aufweist einen gezahnten kreisförmigen Abschnitt (32), der dazu bestimmt ist, um mit einem komplementären gezahnten Rad (16) im Eingriff zu sein, das von der Achse (12) getragen wird.

7. Antriebs-Vorrichtung (10) gemäß irgendeinem der vorhergehenden Ansprüche, aufweisend einen Wechselstromrichter (20), welcher den Motor (18) versorgt.

8. Schienenfahrzeug mit wenigstens einem Drehgestell, das mit wenigstens einer Achse (12) ausgestattet ist, **dadurch gekennzeichnet, dass** es aufweist wenigstens eine Antriebs-Vorrichtung (10) gemäß irgendeinem der vorhergehenden Ansprüche, wobei der Umlaufgetriebezug (22) mit der besagten Achse (12) kinematisch verbunden ist.

9. Verfahren zum Schutz eine Antriebs-Vorrichtung (10) gemäß irgendeinem der Ansprüche 1 bis 7, **dadurch gekennzeichnet, dass**:
- die Detektions-Mittel (34) fortlaufend das Vorliegen einer Anomalie an dem Motor (18) überwachen, und,
- wenn eine Anomalie detektiert wird, die Steuer-Mittel (38) die Sperr-Mittel (34) in die Freigebekonfiguration überführen.

## Claims

1. A pulling device (10) for pulling a vehicle, in particular for a railway vehicle, the pulling device (10) including:
- at least one motor (18) comprising an output shaft (19),
- an epicyclic gear train (22), comprising a first element, a second element, and a third element selected from an internal sun gear (24), an external ring gear (26), and a planet carrier (30) carrying the planet gears (28) that engage by intermeshing with the internal sun gear (24) and with the external ring gear (26), the first element being integrally secured in rotation with the output shaft (19), the second element being designed to drive an axle (12) of the vehicle in rotation;
- releasable locking means (34), that are capable of assuming a locking configuration in which they immobilise the third element in rotation, and a release configuration in which the third element is released so as to be freely rotatable; **characterized in that** it comprises:
- detection means (36) for detecting an anomaly with respect to the motor (18);
- control means (38) for controlling the locking means (34), that are capable of maintaining the locking means (34) in the locking configuration when the detection means (36) do not detect any anomalies, and of moving the locking means (34) into the release configuration when the detection means (36) detect an anomaly.

2. A pulling device (10) according to claim 1, in which the motor (18) is of the synchronous type.

3. A pulling device (10) according to claim 1 or 2, in which the anomaly detecting means (36) are capable of detecting a short circuit, in the motor (18) or in an electric power supply circuit of the motor.

4. A pulling device (10) according to any one of the preceding claims, in which the locking means (34) comprise at least one brake (35) that is capable of clamping the third element into the locking configuration and of releasing the third element into the release configuration.

5. A pulling device (10) according to any one of the preceding claims, in which the third element is formed by the external ring gear (26) and includes a ring comprising an internal toothed surface that engages by intermeshing with the planet gears (28), the locking means (34) comprising at least one brake (35) that is capable of clamping the ring (26) into the locking configuration and of releasing the ring (26) into the release configuration.

6. A pulling device (10) according to any one of the preceding claims, in which the second element is formed by the planet carrier (30) and includes a toothed circular portion (32) designed to engage by intermeshing with a complementary gear (16) carried by the axle (12).

7. A pulling device (10) according to any one of the preceding claims, including an inverter (20) that supplies power to the motor (18).

8. A railway vehicle that includes at least one bogie provided with at least one axle (12), **characterised in that** it includes at least one pulling device (10) according to any one of the preceding claims, in which the epicyclic (or planetary) gear train (22) is kinematically connected to the said axle (12).

9. A protection method for protecting a pulling device (10) according to any one of claims 1 to 7, **characterised in that**:
- the detection means (34) continuously monitor the motor so as to detect the presence of an anomaly therein (18); and
- when an anomaly is detected, the control means (38) move the blocking means (34) into the release configuration.
